# EUROPEAN PATENT APPLICATION

(11) **EP 2 028 207 A1**
(43) Date of publication of application: **25.02.2009**
(21) Application number: 08014539.4
(22) Date of filing: 14.08.2008
(51) Int. Cl.: C08G 59/00, C08L 63/00

(54) **Resin composition for composite material parts**

(30) Priority: 14.08.2007 TW 96130034; 29.08.2007 CN 200710146234
(71) Applicant: Swancor Industrial Co., Ltd., 540 Nan-Tou City (TW)
(72) Inventor: Tsai, Jau-Yang, 540 Nan-Tou City (TW); Yur, Shih-Wen, 540 Nan-Tou City (TW); Chen, Ching Yuan, 540 Nan-Tou City (TW)
(74) Representative: Becker Kurig Straus

(57) **Abstract**

A resin composition for composite material parts includes a main agent composed of an epoxy resin and a reactive diluent, and a curing agent. The reactive diluent, which is monomer or oligomer of acrylate or methacrylate having one or more vinyl (unsaturated double bond) functional groups and has low viscosity at room temperature, is used in an amount of 5 to 30 parts by weight based on 100 parts by weight of the main agent such that the main agent has a viscosity of 700 to 3000 cps at 25°C. The resin composition of the present invention is very suitable for being used to manufacture composite material parts used in wind blade, boat, automobile and aircraft by the manufacturing process such as vacuum infusion and hand lay-up vacuum assisted resin infusion process.

## Description

### BACKGROUND OF THE INVENTION

### 1. Field of the Invention

The present invention relates generally to an epoxy resin composition for manufacturing composite material parts and more particularly, to a resin composition that can prolong and adjust the gel time during the curing reaction thereof with a little bit deterioration of the mechanical property thereof by using a reactive diluent, acrylate or methacrylate monomer or oligomer having monofunctional group or multifunctional groups. The resin composition of the present invention exhibits excellent processing property, low exothermic peak temperature and good fiber impregnating property and is capable of improving toughness of cured resin manufactured therefrom, so that it is very suitable for being used to manufacture large composite material parts used in wind blade, boat, automobile and aircraft by the manufacturing process such as vacuum infusion and hand lay-up vacuum assisted resin infusion process. In addition, the resin composition of the present invention is in compliance with the standard of GL 2000 (Germanischer Lloyd) concerning the application of the epoxy resin material on fiber composite material.

### 2. Description of the Related Art

The epoxy resin has been developed for a long period of time, while the industrial manufacturing and application thereof are developed for recent years. Two important discoveries in the late 19th century and the early 20th century respectively start the research of the epoxy resin. In 1891, Lindmann in Germany produced resin products from a reaction between hydroquinone and epichlorophydrin, and Prileschajew in Russia in 1909 found that epoxides can be produced from a reaction between anisole peroxide and olefin. The aforesaid chemical reactions are the classical ways of synthesizing epoxy resin until nowadays.

The first known patent on epoxy was issued to Pierre Castan in Switzerland in 1938. And in 1943, Green-lee of United States explored and developed several basic epoxy systems by reacting bisphenol with epichlorophydrin.

The thermosetting polymer material prepared through crosslinking reaction by adding an appropriate curing agent, such as amine, polyamide, or etc., into epoxy resin has the properties as follows.
a) Low-middle curing temperature: the curing reaction can be carried out at a temperature of 5 to 150 °C;
b) Low volume shrinkage rate: the volume shrinkage rate of curable epoxy resin is 1 to 3%;
c) Good adhesiveness;
d) Good mechanical property;
e) Good insulating property; and
f) Good chemical resistance.

As mentioned above, epoxy resin is a thermosetting plastic with excellent properties. Because it has many good properties, it is extensively used in industry such as adhesive, coating, composite material, wind blade and aircraft.

On the other hand, some properties, e.g. high viscosity and brittleness, of epoxy resin limit the application thereof. Thus, a diluent having monofunctional group or a nonreactive diluent is widely used to decrease the viscosity of epoxy resin so as to increase its processing property; however, this causes serious deterioration of the mechanical strength and the heat resistance of epoxy resin.

Therefore, it is desire to provide an epoxy resin composition that has a low viscosity to prolong the gel time so as to improve the processing property thereof.

### SUMMARY OF THE INVENTION

The primary objective of the present invention is to provide a resin composition that has low viscosity and low exothermic peak temperature and can prolong the gel time and increase the mechanical strength of the products made therefrom.

To achieve the above-mentioned objective, the resin composition of the present invention comprises a main agent composed of an epoxy resin and a reactive diluent, and a curing agent. The reactive diluent, which is monomer or oligomer of acrylate or methacrylate having one or more vinyl (unsaturated double bond) functional groups and low viscosity at room temperature, is used in an amount of 5 to 30 parts by weight based on 100 parts by weight of the main agent, resulting in that the main agent has a viscosity of 700-3000 cps after adding the reactive diluent into the epoxy resin.

### DETAILED DESCRIPTION OF THE INVENTION

Hereinafter, a detailed description will be given through the following embodiments of the present invention, which are set forth to illustrate, but are not to be construed as the limit of the present invention.

The resin composition for large composite material parts of the present invention comprises a main agent composed of an epoxy resin and a reactive diluent, and a curing agent. By means of adding the reactive diluent, which is monomer or oligomer of acrylate or methacrylate having one or more vinyl (unsaturated double bond) functional groups and low viscosity at room temperature, into the epoxy resin to lower the viscosity of the main agent, the viscosity of the mixture of the main agent and the curing agent can be extensively decreased, resulting in that the resin composition of the present invention can have low exothermic peak temperature, good fiber impregnating property and long gel time, so that it is very suitable for being used in manufacturing large composite material parts.

As the monomer or oligomer of acrylate or methacrylate of the reactive diluent, the one or a mixture of two or more selected from the group consisting of aliphatic, ether, ester, epoxy and urethane type acrylate or methacrylate, having one or more unsaturated double bond functional groups can be used.

As the acrylate monomer or oligomer, the one or a mixture of two or more selected from the group consisting of β-carboxyethyl acrylate, butyl acrylate, 2-ethylhexyl acrylate, octyl acrylate, iso-octyl acrylate, nonyl acrylate, iso-nonyl acrylate, decyl acrylate, isodecyl acrylate, octyl decyl acrylate (ODA), benzyl acrylate, cyclohexyl acrylate, t-butyl cyclohexyl acrylate, phenoxy ethyl acrylate, ethoxylated phenoxy ethyl acrylate, propoxylated phenoxy ethyl acrylate, nonyl phenoxy ethyl acrylate, butoxy ethyl acrylate, lauryl acrylate, isobornyl acrylate, dihydrocyclopentadiene acrylate, tetrahydrofuryl acrylate, ethoxy ethyl acrylate, urethane acrylate, epoxy acrylate, hexanediol diacrylate (HDDA), tripropylene glycol diacrylate, diethylene glycol diacrylate (DEGDA), trimethylolpropane triacrylate (TMPTA), triethylene glycol diacrylate (TEGDA), butanediol diacrylate (BDDA), dipropylene glycol diacrylate (DPGDA), and N-pentane glycol diacrylate (NPGDA) can be used.

As the methacrylate monomer or oligomer, the one or a mixture of two or more selected from the group consisting of glycidyl methacrylate (GMA), 1,6-hexanediol dimethacrylate (HDDMA), ethylene glycol dimethacrylate (EGDMA), propylene glycol dimethacrylate (PGDMA), cyclohexane dimethacrylate, butanediol dimethacrylate, diethylene glycol dimethacrylate, triethylene glycol dimethacrylate, isobornyl methacrylate, methyl methacrylate (MMA), ethoxylated trimethylolpropane trimethacrylate, and trimethylolpropane trimethacrylate (TMPTMA) can be used.

As the epoxy resin contained in the main agent, bisphenol A epoxy resin, bisphenol F epoxy resin, multifunctional epoxy resin, novolac epoxy resin, brominated type epoxy resin, o-cresol-formaldehyde epoxy resin, rubber-toughened epoxy resin or a mixture thereof can be used.

As the curing agent, linear aliphatic amine, cycloaliphatic amine, aromatic amine, polyamide or a mixture thereof having a viscosity in a range of 1 to 400 cps at 25°C can be used. Preferably, the linear aliphatic amine is one selected from the group consisting of ethylene diamine, diethylene triamine and triethylene tetramine. Preferably, the cycloaliphatic amine is one selected from the group consisting of N-amino ethyl piperazine, menthane diamine and isophorone diamine. Preferably, the aromatic amine is m-xylene diamine.

The resin composition of the present invention has the properties as follows.
a) The main agent has a low viscosity of 700 to 3000 cps;
b) The resin composition has a low viscosity of 100 to 1000 cps;
c) The resin composition has a long gel time;
d) The resin composition has a lower exothermic temperature, which can be cured at room temperature;
e) The curing procedure requires vacuum environment without additional pressure;
f) The resin composition has good fiber impregnating property; and
g) The product made therefrom has higher toughness and a mechanical strength in compliance with GL 2000 standard.

The resin composition of the present invention contains a main agent composed of an epoxy resin and a reactive diluent, and a curing agent. Preferably, the epoxy resin is used in an amount of 70 to 95 parts by weight, the diluent is used in an amount of 5 to 30 parts by weight, and the curing agent is used in an amount of 20 to 50 parts by weight, based on 100 parts by weight of the main agent.

In preparation of the resin composition of the present invention, the epoxy resin is first mixed with the reactive diluent to form the main agent (A agent), and then the main agent is mixed with the curing agent. The reactive diluent may be selected from acrylate monomer, methacrylate monomer, acrylate oligomer, or methacrylate oligomer. The epoxy resin may be, but not limited to, bisphenol A or bisphenol F epoxy resin, or it may be a mixture of two or more epoxy resins, depending on the properties of the material. The bisphenol A or bisphenol F epoxy resin used in the present invention is represented by the following structural formula.

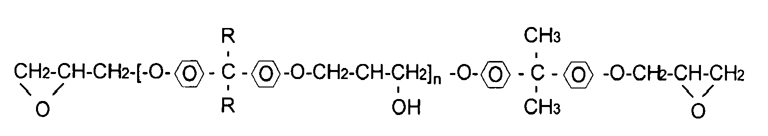

In the resin composition of the present invention, the monomer or oligomer of acrylate or methacrylate is used to dilute the epoxy resin so as to lower the viscosity thereof. Specifically, as shown in the following Equations the double bond of the acrylate or methacrylate is reacted with the amine group of the curing agent based on Michael addition reaction.

[Equation for reaction of diluent with curing agent] 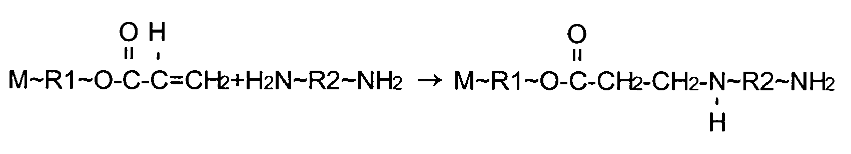 wherein M is acrylate or methacrylate of ester, aliphatic, ether, epoxy or urethane group.

[Equation for reaction of epoxy resin with curing agent]

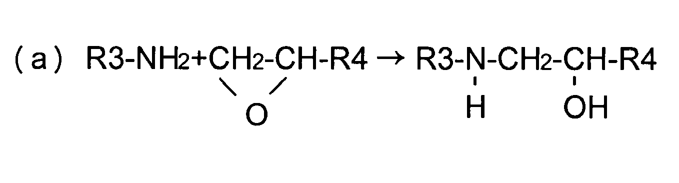

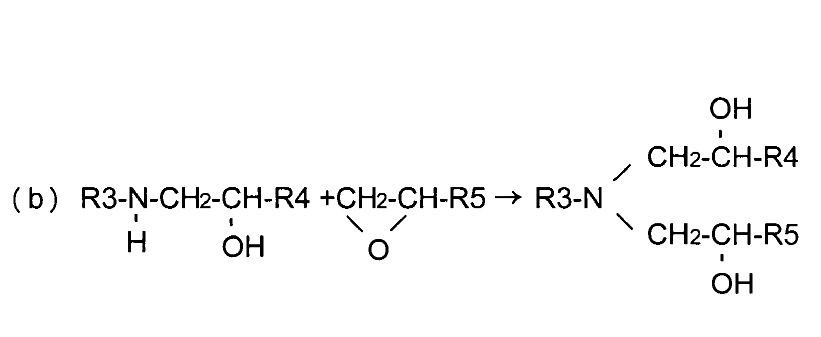

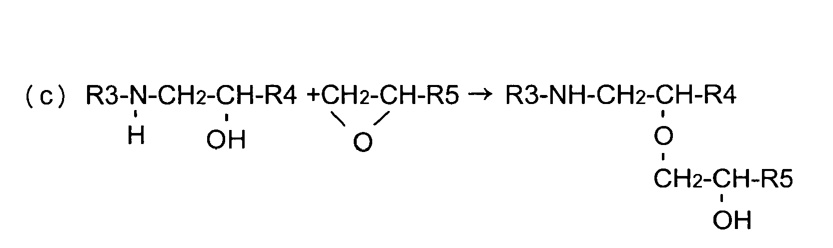

As shown in the above-mentioned equations, the reactive diluent is reacted with the curing agent to obtain high molecular crosslinking density, so that the deterioration of the mechanical strength and heat resistance can be limited to a certain extent.

A better understanding of the present invention may be obtained through the following examples. However, these are to illustrate the present invention and the present invention is not limited to them.

### [Example]

The following tables show the compositions and the amounts thereof used in examples 1-4, in which example 1 is a comparative example without using a reactive diluent.

**A agent**

| Composition (part by weight) | Ex. 1 | Ex. 2 | Ex. 3 | Ex. 4 |
|---|---|---|---|---|
| (1)Bisphenol A epoxy resin | 100 | 90 | 90 | 83 |
| (2)Tripropylene glycol diacrylate (TPGDA) | 0 | 10 | 0 | 17 |
| (3)Butyl glycol ether (BGE) | 0 | 0 | 10 | 0 |

**B agent**

| Composition (part by weight) | Ex. 1 | Ex. 2 | Ex. 3 | Ex. 4 |
|---|---|---|---|---|
| (4)Isophorone diamine (IPDA) | 17.4 | 17.4 | 17.4 | 16.5 |
| (5)Polyether amine | 11.15 | 11.68 | 11.68 | 13.5 |
| | | | | |

| | Ex. 1 | Ex. 2 | Ex. 3 | Ex. 4 |
|---|---|---|---|---|
| A agent/B agent weight ratio | 100:28.85 | 100:29.08 | 100:29.08 | 100:30 |

In the aforesaid tables, bisphenol A epoxy resin has an epoxide equivalent of 176-184 g/eq and a viscosity of 8000-12000 cps at 25°C, TPGDA has a viscosity of 7-17 cps at 25°C, BGE has a viscosity of 2-10 cps at 25°C, IPDA has an active hydrogen equivalent of 42.6 g/eq and a viscosity of 18.5 cps at 25°C, and polyether amine has an active hydrogen equivalent of 60 g/eq and a viscosity of 5-12 cps at 25°C.

After the A agent and B agent were well mixed, 100g of the mixture of A agent and B agent in each of the examples was taken out at 26°C and measured for exothermic peak temperature and gel time. The results are shown in the following table.

| | Ex.1 | Ex. 2 | Ex. 3 | Ex. 4 |
|---|---|---|---|---|
| Viscosity of A agent (25°C) | 8500cps | 2350cps | 700cps | 1150cps |
| Viscosity of B agent (25°C) | 16cps | 15cps | 15cps | 15cps |
| Viscosity of mixture of A agent and B agent (25°C) | 760cps | 410cps | 225cps | 280cps |
| Exothermic peak temperature (26°C, 100g) | 186°C | 91.5°C | 175°C | 70.5°C |
| Gel time (26°C, 100g) | 176mins | 218mins | 262mins | 250mins |

According to the test results as shown in above table, the following conclusions can be obtained.
1. TPGDA diluent and BGE diluent can extensively lower the viscosity of the epoxy resin and the viscosity of the mixture of A agent and B agent.
2. TPGDA diluent can extensively lower the exothermic peak temperature of the chemical reaction of epoxy resin from 186°C to 91.5°C; however, the conventional monofunctional epoxy group diluent can not effectively lower the exothermic peak temperature (the exothermic peak temperature is lowered just a little bit, from 186°C to 175°C).
3. TPGDA diluent can effectively prolong the gel time.

The mechanical strength and thermal deformation temperature of the above-mentioned examples were measured according to the way described hereunder.

The test specimen of each example was prepared according to the following steps:
a) adhering release papers on glass plates;
b) placing three standard silicone strips having a thickness of 3mm, a length of 250mm and a width of 15mm in between two glass plates at three edges of the glass plates to leave an opening at one edge of glass plates for infusion of resin;
c) fixing the silicone strips in between the glass plates by industrial clamps for achieving seal effect to prevent leakage of the resin;
d) mixing compositions (1) and (2) or compositions (1) and (3) with the predetermined proportion as shown in the above-mentioned table and stirring the mixture at 25°C to prepare the A agent;
e) mixing compositions (4) and (5) with the predetermined proportion and stirring the mixture to prepare the B agent;
f) mixing the A agent and B agent with predetermined proportion and stirring the mixture;
g) vacuum treating the liquid mixture thus obtained from step f) to remove bubbles contained therein;
h) infusing the liquid mixture thus obtained from step g) into the space formed between the glass plates in step c);
i) standing the glass plates for 16 hours at room temperature, then conducting curing treatment at 80°C for 8 hours, and then conducting natural cooling to room temperature.

The bending strength, tensile strength and heat deflection temperature of the test specimen of each example were measured according to ASTM D790, D638 and D648 respectively. The results are shown in the following table.

| | Ex. 1 | Ex. 2 | Ex. 3 | Ex. 4 | Test standard |
|---|---|---|---|---|---|
| Bending strength | 133.1Mpa | 132.2Mpa | 122.9Mpa | 115.9Mpa | ASTM D790 |
| Heat deflection temperature | 93.5°C | 82.7°C | 74.8°C | 72.8°C | ASTM D648 |

It can be learned from the above-mentioned results that TPGDA diluent has a limited influence on the bending strength of epoxy resin; however, BGE diluent will effectively lower the bending strength. TPGDA and BGE diluents will both lower the tensile strength of the epoxy resin; however, the cured epoxy resin made by the composition of the present invention is still in compliance with the GL 2000 standard concerning the application of the epoxy resin on composition material in tensile strength. In addition, although TPGDA diluent will cause deterioration of the heat deflection temperature of epoxy resin, the deterioration degreed caused by TPGDA is less than that caused by BGE diluent, which is generally used in this field. Further, the cured epoxy resin made by the composition of the present invention is still in compliance with the GL 2000 standard concerning the application of the epoxy resin on composition material in heat deflection temperature.

The following tables show the compositions and the amounts thereof used in examples 1, 5 and 6, in which example 1 is a comparative example without using a reactive diluent.

**A agent**

| Composition (part by weight) | Ex. 1 | Ex. 5 | Ex. 6 |
|---|---|---|---|
| (1)Bisphenol A epoxy resin | 100 | 90 | 90 |
| (2)Trimethylolpropane triacrylate (TMPTA) | 0 | 10 | 0 |
| (3)Ethylene glycol dimethacrylate (EGDMA) | 0 | 010 | |

**B agent**

| Composition (part by weight) | Ex. 1 | Ex. 5 | Ex. 6 |
|---|---|---|---|
| (4)Isophorone diamine (IPDA) | 17.4 | 16.8 | 17.0 |
| (5)Polyether amine | 11.15 | 12.2 | 12.1 |
| | | | |

| | Ex. 1 | Ex. 5 | Ex. 6 |
|---|---|---|---|
| A agent/B agent weight ratio | 100:28.85 | 100:29.0 | 100:29.1 |

Examples 1, 5 and 6 were measured for exothermic peak temperature and gel time. The results are shown in the following table.

| | Ex. 1 | Ex. 5 | Ex. 6 |
|---|---|---|---|
| Viscosity of A agent (25°C) | 8500cps | 4500cps | 1300cps |
| Viscosity of B agent (25°C) | 16cps | 15cps | 15cps |
| Viscosity of mixture of A agent and B agent (25°C) | 760cps | 540cps | 285cps |
| Exothermic peak temperature (26°C, 100g) | 186°C | 87°C | 125°C |
| Gel time (26°C, 100g) | 176mins | 200mins | 252mins |

The bending strength, tensile strength and heat deflection temperature of the specimens of examples 1, 5 and 6 were measured according to ASTM D790, D638 and D648 respectively. The results are shown in the following table.

| | Ex. 1 | Ex. 5 | Ex. 6 | Test standard |
|---|---|---|---|---|
| Bending strength | 133.1Mpa | 130.5Mpa | 115Mpa | ASTM D790 |
| Heat deflection temperature | 93.5°C | 85°C | 70°C | ASTM D648 |

It can be seen from the results shown in the above-mentioned tables that TMPTA and EGDMA can lower the viscosity of the epoxy resin and prolong the gel time during the curing reaction, but less deteriorate the mechanical strength of the cured epoxy resin.

In conclusion, the diluent of monomer or oligomer of acrylate or methacrylate show an effect of dilution effectively. It can lower the viscosities of A agent and the mixture of A and B agents used in the resin composition of the present invention, decrease the exothermic peak temperature during the reaction process of epoxy resin, and prolong the gel time to improve the processing property. Therefore, the resin composition of the present invention satisfies the requirements of making composite material parts, especially suitable for products made by vacuum infusion and hand lay-up vacuum assisted resin infusion process and used in wind blade, boat, automobile, aircraft and etc.

## Claims

1. A resin composition comprising:
a main agent including an epoxy resin and a reactive diluent, having a viscosity of 700 to 3000 cps at 25°C; and
a curing agent;
wherein the reactive diluent is used in an amount of 5 to 30 parts by weight based on 100 parts by weight of the mainagent, and the reactive diluent is monomer or oligomer of acrylate or methacrylate having one or more vinyl (unsaturated double bond ) functional groups and has low viscosity at room temperature.

2. The resin composition of claim 1, wherein the curing agent is used in an amount of 20 to 50 parts by weight based on 100 parts by weight of the main agent.

3. The resin composition of claim 1, wherein the epoxy resin is one or a mixture of two or more selected from the group consisting of bisphenol A epoxy resin, bisphenol F epoxy resin, multifunctional epoxy resin, novolac epoxy resin, brominated type epoxy resin, o-cresol-formaldehyde epoxy resin and rubber-toughened epoxy resin.

4. The resin composition of claim 1, wherein the curing agent has a viscosity in a range of 1 to 400 cps at 25°C and is selected from the group consisting of linear aliphatic amine, cycloaliphatic amine, aromatic amine, polyamide and a mixture thereof;
wherein the linear aliphatic amine is selected from the group consisting of ethylene diamine, diethylene triamine and triethylene tetramine;
wherein the cycloaliphatic amine is selected from the group consisting of N-amino ethyl piperazine, menthane diamine and isophorone diamine;
wherein the aromatic amine is m-xylene diamine.

5. The resin composition according to claim 1, wherein the reactive diluent is monomer or oligomer of the acrylate or methacrylate including acrylate or methacrylate groups, havinging one or more unsaturated double functional groups.

6. The resin composition according to claim 5, wherein the acrylate monomer or oligomer is one or a mixture of two or more selected from the group consisting of β-carboxyethyl acrylate, butyl acrylate, 2-ethylhexyl acrylate, octyl acrylate, iso-octyl acrylate, nonyl acrylate, iso-nonyl acrylate, decyl acrylate, isodecyl acrylate, octyl decyl acrylate (ODA), benzyl acrylate, cyclohexyl acrylate, t-butyl cyclohexyl acrylate, phenoxy ethyl acrylate, ethoxylated phenoxy ethyl acrylate, propoxylated phenoxy ethyl acrylate, nonyl phenoxy ethyl acrylate, butoxy ethyl acrylate, lauryl acrylate, isobornyl acrylate, dihydrocyclopentadiene acrylate, tetrahydrofuryl acrylate, ethoxy ethyl acrylate, urethane acrylate, epoxy acrylate, hexanediol diacrylate (HDDA), tripropylene glycol diacrylate, diethylene glycol diacrylate (DEGDA), trimethylolpropane triacrylate (TMPTA), triethylene glycol diacrylate (TEGDA), butanediol diacrylate (BDDA), dipropylene glycol diacrylate (DPGDA), and N-pentane glycol diacrylate (NPGDA).

7. The resin composition according to claim 5, wherein the methacrylate monomer or oligomer is one or a mixture of two or more selected from the group consisting of glycidyl methacrylate (GMA), 1,6-hexanediol dimethacrylate (HDDMA), ethylene glycol dimethacrylate (EGDMA), propylene glycol dimethacrylate (PGDMA), cyclohexane dimethacrylate, butanediol dimethacrylate, diethylene glycol dimethacrylate, triethylene glycol dimethacrylate, isobornyl methacrylate, methyl methacrylate (MMA), ethoxylated trimethylolpropane trimethacrylate, and trimethylolpropane trimethacrylate (TMPTMA).
